# EUROPEAN PATENT SPECIFICATION

(11) **EP 3 552 284 B1**
(45) Date of publication and mention of the grant of the patent: **03.08.2022**
(21) Application number: 16819672.3
(22) Date of filing: 12.12.2016
(51) Int. Cl.: H02G 3/00, E04H 17/16, G08B 13/12

(54) **CABLING DEVICE**
KABELLEGEVORRICHTUNG
DISPOSITIF DE CÂBLAGE

(43) Date of publication of application: 16.10.2019
(73) Proprietor: Guardiar Europe BVBA, 8550 Zwevegem (BE)
(72) Inventor: MESSELIS, Timothy, 8930 Lauwe (BE)
(74) Representative: Brand Murray Fuller LLP
(86) International application number: PCT/IB2016/057544
(87) International publication number: WO 2018/109523

(56) References cited:
- WO-A1-2007/112483
- WO-A1-2014/057278
- DE-A1-102015 205 640
- US-A- 4 318 088
- US-A- 5 606 919
- Electrical Installation Wiring Pictures: "Electrical Installation Wiring Pictures: Electrical installation pictures", , 23 February 2010 (2010-02-23), XP055335633, Retrieved from the Internet: URL:http://electricalinstallationwiringpic ture.blogspot.nl/2010/02/electrical-instal lation-pictures.html [retrieved on 2017-01-16]

## Description

The present invention relates to a cabling device for a fence with posts, wherein the cabling device comprises several duct elements which are configured to form a first duct which connects to one side of the fence and into which cables can extend.

The present invention also relates to a fence comprising such a cabling device.

Fences are used to prevent people, animals etc. from intruding a certain area. These fences can be provided with a cabling device into which one or several cables extend. These cables can be electrical and/or data cables, which make it possible to provide the fence with detection, access control, lightning, etc. Thus with the aid of the said cables, information about the status of the fence, the area around the fence, etc. can be provided. For example one can detect if contact is made with the fence and/or one can control a video camera.

An embodiment of an existing cabling device comprises a cable duct which is provided to be fixed upon the top side of the fence. When the fence comprises posts, these posts then do not hinder the connection of the cable duct to the fence. However the fixation of a said cable duct to the fence and the application of cables in the duct is complex and time consuming. The location of the cables is also not excellent, such that detection devices etc. connected to the said cables, cannot properly carry out their function.

Another cabling device which is used for fences with posts, comprises multiple cable ducts which are each provided between two successive posts. Openings are made in the posts such that the cables can pass through the posts from one duct into another. Here the cables are at a desired height. However openings need to be made in the posts, which is labour intensive and time consuming. Also the strength of the said posts diminishes. It is also not easy to apply cables into these openings, because the cables need to be pulled through/pushed through these ducts and openings. At the height of the openings it is often difficult to get the cable from the duct into the opening. The cables are also not well protected at the height of the openings. Examples of the cabling device described can be found in WO2014/057278A1 or WO2007/112483A1

It is therefore an object of the invention to provide a cabling device which can be easily attached to the fence at the desired height and into which the cables can be easily placed.

This object is achieved by providing a cabling device for a fence with posts, according to claim 1.

Here the cabling device comprises adapting duct elements, which in connected state of the cabling device to the fence, are configured to extend around the fence posts. Therefore no openings for cables need to be provided in the posts, and the posts can keep their strength. Also the ducts elements form a continuous first duct, such that cables can easily be pulled through/pushed through this first duct. This continuous first duct can be a completely enclosed duct with nearly no openings, or small openings can be present. However because it is a continuous first duct, the cables which are embedded in the first duct are well protected over the entire length of the first duct. The linear duct elements extend between two posts at the level of the said side of the fence. Preferably only one linear duct element extends between two successive posts, however two or more linear duct elements can be interconnected to extend between two successive posts. At the height of the posts, adjacent linear duct elements are connected to each other with the aid of one or several adapting duct elements which extend around the respective fence post, at the level of the said side of the fence. For example one adapting duct element can connect two adjacent linear duct elements, or two or more adapting duct elements together can connect two adjacent linear duct elements.

Because the fence posts form no obstacles for this first duct, this first duct can be connected to the fence at the desired height and the connection can be performed in an easy manner. These adapting duct elements can all have the same dimensions, however one can also provide in adapting duct elements with different dimensions, such that for every type of fence post, there is a suitable adapting duct element. For example one can provide a number of standard adapting duct elements.

Preferably the said side of the fence is the inner side of the fence, being the side opposite the side where the possible intruders are present, such that possible intruders cannot sabotage the cabling device.

Further preferably the linear duct elements are provided to extend substantially according to a first longitudinal direction. The first duct then extends substantially according to this first longitudinal direction, except at the level of the posts where the adapting duct elements are present. Even more preferably this first longitudinal direction extends substantially horizontal. Normally the fence is placed such that the posts extend vertically. The linear duct elements then extend perpendicular to the longitudinal direction of the fence posts. If the surface is flat and the posts extend vertically with regard to the surface, then the linear duct elements extend horizontal to the surface onto which the fence is placed. The cables which are provided in said first duct then also extend horizontally. With such a cabling device, a fence can be provided with cables along its lengthwise direction.

According to the invention the one or several adapting duct elements which are configured to extend around one of the said posts to connect two adjacent linear duct elements separated by the said post, comprise a protruding part which is configured to extend around the post and two end parts who respectively are configured to be connected to the respective linear duct element. With the aid of the said protruding part, the adapting duct elements can easily go around the posts. This protruding part, protrudes with regard to the linear duct elements.

Further preferably the protruding part comprises three sections which extend respectively according to the two lateral sides and the small basis of an isosceles trapezoid. With such a shape it is easy to go around a fence post. In an alternative embodiment the protruding part can have a U-shaped form. In another alternative embodiment the protruding part can be a bent duct part.

Even more preferably two adapting duct elements together are configured to extend around a said post to connect two adjacent linear duct elements separated by the said post, wherein each adapting duct element comprises
- a first portion, which is configured to be connected to a said linear duct element and to extend according to the first longitudinal direction, such that it forms a said end part;
- a second portion, which extends at a distance from and substantially parallel to the first portion;
- a third portion, wherein the third portion connects on the one hand to the first portion and on the other hand to the second portion;
and wherein the said adapting ducts elements are configured to lie facing each other at the height of their second portions, such that these second portions form the small basis of the said isosceles trapezoid and each third portions forms a said respective lateral side of the said isosceles trapezoid.

Here two adapting duct elements are configured to connect two adjacent linear duct elements which are separated by a fence post. Here, viewed along the longitudinal direction of the first section, the second section of a said adapting duct element lies at a distance from the first section of the adapting duct element and the angle between the second section and the third section and between the first section and the third section is greater than 90°.

In an alternative embodiment one adapting duct elements is configured to extend around a said post to connect adjacent linear duct elements separated by the said post, wherein the said adapting duct comprises
- two first portions, which are each configured to be connected to a said respective linear duct element and to extend according to the first longitudinal direction, such that they each form a said respective end part;
- a second portion, which extends at a distance from and substantially parallel to the first portion;
- two third portions, wherein each third portion connects on the one hand to a respective first portion and on the other hand to the second portion;
and wherein the second portion forms the small basis of the said isosceles trapezoid and the third portions form the lateral sides of the said isosceles trapezoid.

Preferably one or several duct elements each comprise two connectable profiles wherein a first profile is configured to be located opposite the said fence side, and wherein a second profile is connectable to the first profile after the first profile is connected to the fence. Preferably all said duct elements are constructed this way. Here one can first connect all the first profiles to the fence. One can then simple put cables into the first profile and afterwards connect the second profiles to the first profiles. Here one should not pull or push the cables through the duct, one can simple place them in the first profiles. Providing a fence with a cabling device and cables, is here then less labor intensive and less time consuming. These profiles follow the directions of the cables which are provided to extend in the duct elements.

Even more preferably the first profile and the second profile are clickable connectable to each other, such that they can easily and rapidly be connected to each other.

In a preferred embodiment, a part of a said adapting duct element extends within its respective linear duct element, at the height of the connection of the linear duct element and the adapting duct element. This ensures a firm and solid connection between the linear duct elements and the adapting duct elements, such that the first duct is solid and able to contain the cables very well. The cables here cannot move between the linear duct element and the adapting duct element connected to the said linear duct element.

More preferably, at the height of the connection of a said linear duct element and a said adapting duct element, the inner dimensions of the section of the linear duct element, perpendicular to the longitudinal direction of the linear duct element, correspond to the outer dimensions of the corresponding section of the adapting duct element, such that the adapting duct element is form fitted into the linear duct element.

In a very preferred embodiment, the cabling device comprises ballistic protection material. With the aid of the said material, the cables which extend in the duct, are well protected from bullet impacts and similar. This ballistic material is preferably enclosed in one or several duct elements. Alternatively this ballistic protection material is provided to extend between the duct elements and the fence. Preferably the ballistic protection material is present under the form of sheets. These sheets are then for example embedded in one are several duct elements. These sheets can for example be applied against one or several walls of the duct elements such that the cables which lie in these duct elements are well protected. Preferably these sheets are applied to the walls which face the said side of the fence. These sheets can for example comprise fiberboard and/or ceramic material.

Also preferably the ballistic protection material comprises fiberglass composite. In a preferred embodiment the cabling device comprises at least one upright duct, which is configured to extend vertical, wherein the said upright duct is configured to be connected to the first duct, such that a cable can extend in both the first duct and the upright duct. Cables can then be connected to a network or a device which is located at the level of the surface or which is placed upon the surface.

In a very preferred embodiment the cabling device comprises a grounding system which is configured to connect the first duct to a said fence post, to ground the cabling device. When there are electrical disturbances, such as a lighting strike, electricity will be grounded such that damages can be avoided.

Further preferably the grounding system comprises a first contact element, which is configured to be connected to a said adapting duct element and a second contact element, which is configured to be connected to the fence post around which the adapting duct element extends, wherein the said grounding system comprises an electrical cable which connects the first contact element with the second contact element such that the first duct is grounded through the said post. The posts are normally embedded in the ground and are often manufactured from an electrically conductive material such as metal, whereby this is a simple way of grounding electricity. Since the adapting duct elements are the closest to the posts, the electrical cable of the grounding system need not to be long.

Preferably at least one linear duct element comprises one or several dividers which extend in the longitudinal direction of the linear duct element and which divide the linear duct element in two or several compartments which extend along the longitudinal direction of the linear duct element. One can then choose which cables are placed in which compartments, such that it can be avoided that cables interfere with each other.

In a very preferred embodiment the cabling device comprises a least a second set of duct elements which are configured to form a second duct which connects to the said side of the fence and into which cables extend. This second duct is then preferably constructed in the same matter as the first duct, which is disclosed above. Also preferably when an upright duct is present, the upright duct is also connected to the second duct.

The cabling device preferably comprises bolts and nuts to fixate the first duct to the said side of the fence, wherein the cabling device comprises a fixation aid comprising hook elements which are configured to hook on the fence and wherein this fixation aid comprises an opening into which a said bolt is provided to engage. With the aid of the fixation aid, the duct can then be well and firmly connected to the fence.

The object is also achieved by providing a fence with posts comprising a cabling device as described above. All the advantages described above then also apply to this fence comprising the said cabling device. All preferred embodiments and characteristics also apply to this fence.

This fence preferably comprises several panels, wherein the first duct is directly connected to these panels with the aid of connecting elements, such as bolts and nuts. Further preferably these panels are wire panels. Ducts can be easily connected to wire panels with the aid of connecting elements, such as bolts and nuts.

The present invention is now explained in greater detail below with reference to the following detailed description of some preferred embodiments of a cabling device according to the present invention. The aim of this description is solely to give illustrative examples and indicate further advantages and particularities and thus cannot be interpreted as a limitation of the field of application of the invention or of the patent rights claimed in the claims.

In this detailed description, reference is made by means of reference numerals to the appended drawings, wherein
- ***figure 1*** is a detail of a simplified back view of a fence comprising panels and posts, wherein a cabling device according to the invention is attached to the fence;
- ***figure 2*** is a top view of the fence represented in figure 1;
- ***figure 3*** is a detail of a perspective view of the fence represented in figures 1 and 2, wherein the grounding system and the upright duct are not represented;
- ***figure 4*** is an exploded view of a linear duct element according to the invention;
- ***figure 5*** is an exploded view of an adapting duct element according to the invention;
- ***figure 6*** is an exploded view of the linear duct element of figure 4 and the adapting duct element of figure 5;
- ***figure 7*** is a sectional view of the linear duct element represented in figure 4 attached to a fence, perpendicular to the longitudinal direction of the linear duct element;
- ***figure 8*** is a perspective view of a fixation aid according to the invention;
- ***figure 9*** is a detail of a perspective view of the fence shown in figures 1 and 2, wherein the connection between the cabling device and the fence is shown;
- ***figure 10*** is a detail view of figure 1, wherein the grounding system is clearly visible;
- ***figure 11*** is a front view of the grounding system according to the invention.
- ***figure 12*** is a sectional view of an alternative embodiment of a linear duct element according to the invention, perpendicular to the longitudinal direction of the linear duct element, wherein the linear duct element is attached to a fence and ballistic material is present between the linear duct element and the fence.

The figures disclose cabling device according to the invention and an alternative embodiment of a cabling device. They also disclose a fence with posts (6), comprising the said cabling device. Off course other embodiments are possible.

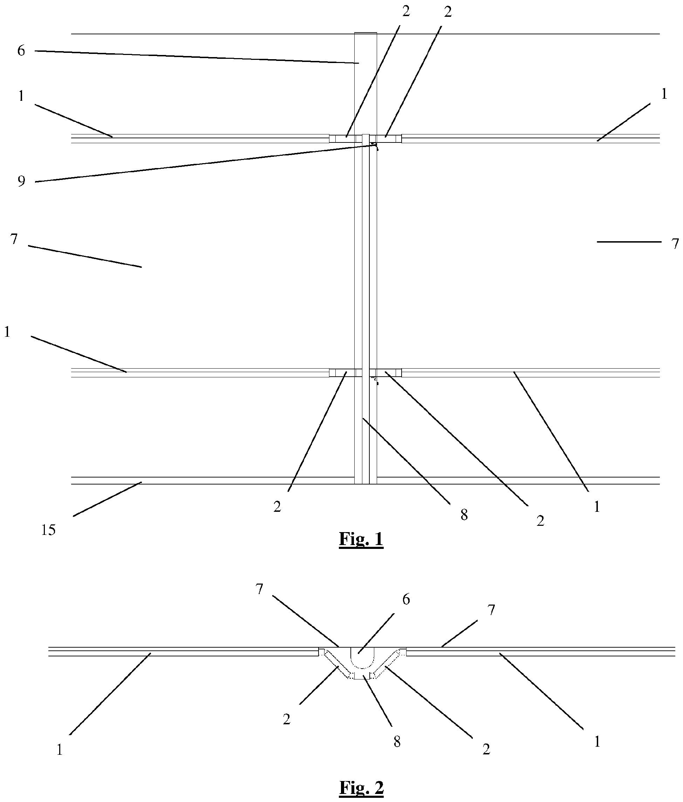

The cabling device is configured to be attached to a fence, wherein the said fence comprises wire panels (7) and posts (6). The posts (6) interconnect the consecutively wire panels (7) and also form the end poles of the fence. The fence is placed upon a surface (15). This is shown in figure 1.

The cabling device comprises two sets of several duct elements (1, 2) wherein each set is configured to form a duct which connects to the inner side of the fence and into which cables (14) can extend. Here the first set of duct elements (1, 2) is configured to form a first duct and the second set of duct elements (1, 2) is configured to form a second duct, wherein the first duct is attached at a higher position to the fence then the second duct.

Each set of duct elements (1, 2) comprises linear duct elements (1), which are configured to extend horizontally between two posts (6) and adapting duct elements (2) which are configured to connect adjacent linear duct elements (1) which are separated by a said post (6), by extending around the said post (6). These linear duct elements (1) extend horizontal with regard to the surface (15).

For each couple of adjacent linear duct elements (1) which are separated by a said post (6), a pair of two adapting duct elements (2) are used to connect these linear duct elements (1) to each other. A said pair comprises a protruding part which are configured to extend around the post (6) and two end parts who respectively are configured to be connected to a respective linear duct element (1). The protruding part comprises three sections which extend respectively according to the two lateral sides and the small basis of an isosceles trapezoid.

Each adapting duct element (2) of the said pair comprises
- a first portion (3), which is configured to be connected to a linear duct element (1) and to extend according to the first longitudinal direction, such that it forms a said end part;
- a second portion (4), which extends at a distance from and substantially parallel to the first portion (3);
- a third portion (5), wherein the third portion (5) connects on the one hand to the first portion (3) and on the other hand to the second portion (4);
and wherein two said adapting duct elements (2) are provided to lie facing each other at the height of their second portions (4), such that these second portions (4) form the small basis of the said isosceles trapezoid and each third portion (5) forms a said respective lateral side of the said isosceles trapezoid.

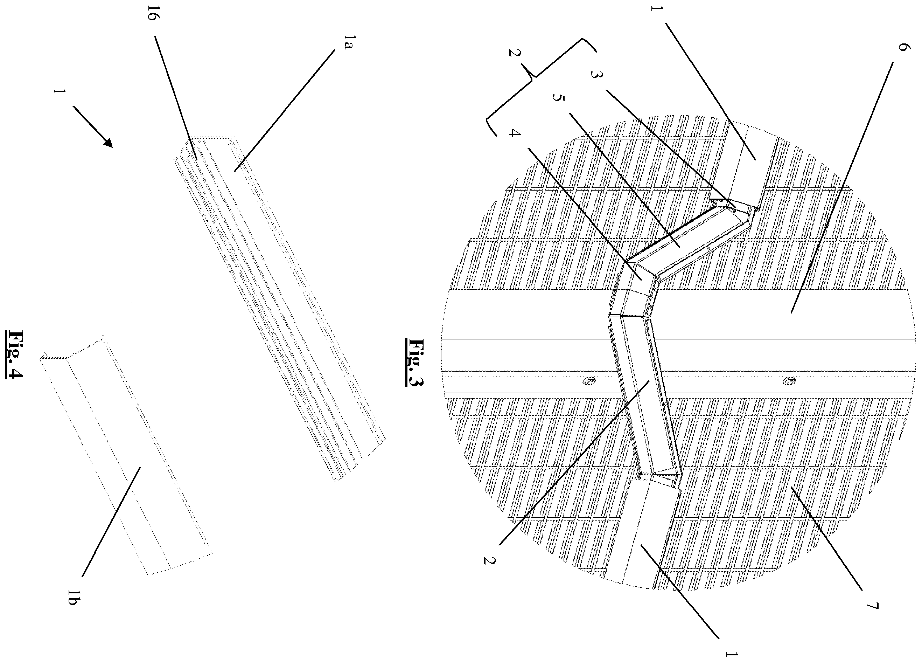

Each linear duct element (1) and each adapting duct element (2) comprises two connectable profiles (1a, 1b; 2a, 2b) (figures 4 to 6), which in installed state of the cabling device, substantially follow the direction of the cables (14). The first profiles (1a, 2a) are first attached to the wire panels (7) with the aid of bolts (11) and nuts (12). The second profiles (1b, 2b) are connected to the first profiles (1a, 2a) after the first profiles (1a, 2a) are connected to the fence. The second profiles (1b, 2b) are clickable connectable to their respective first profiles (1a, 2a).

The said end parts of the pair of two adapting duct elements (2) extend within its respective linear duct element (1) and the inner dimensions of the section of the linear duct element (1), perpendicular to the longitudinal direction of the linear duct element (1), correspond to the outer dimensions of the corresponding section of the adapting duct element (2), such that the adapting duct element (2) is form fitted into the linear duct element (1).

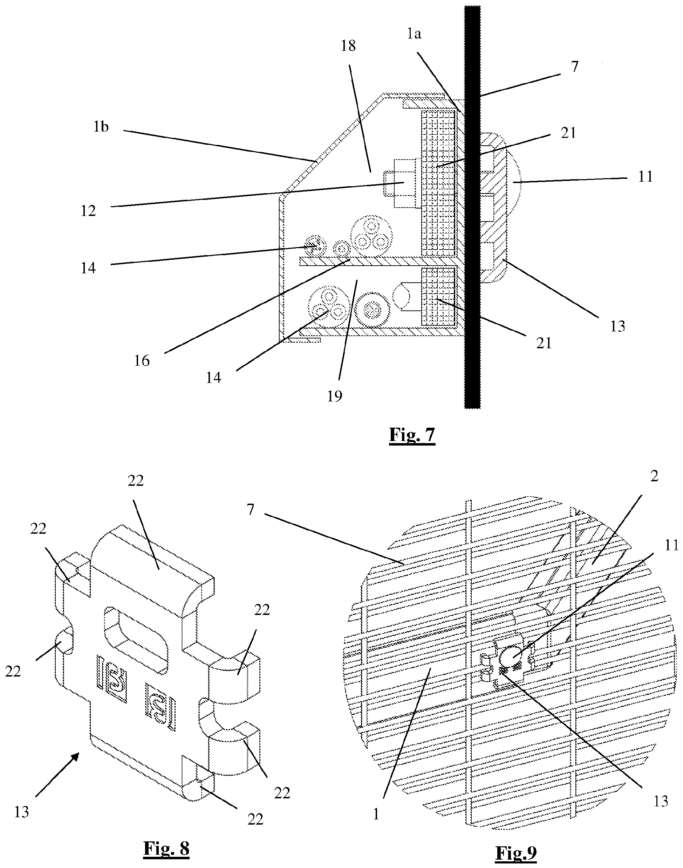

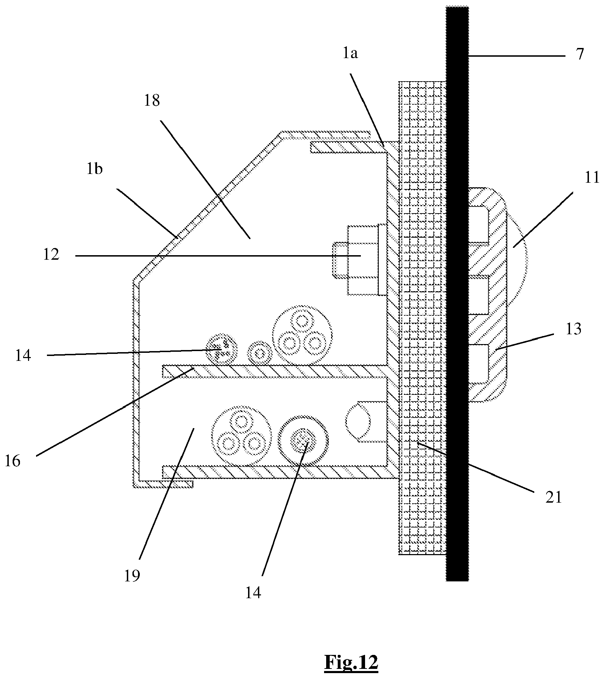

Further, as can be seen in figure 7, the first profiles (1a, 2a) comprise sheets (21) of fiberglass composite which are applied to the wall which is opposite the inner side of the fence, such that the cables (14) which are present in the duct or protected from impacts from bullets etc. Fiberglass composite is a ballistic protection material. In the alternative embodiment, represented in figure 12, said sheets (21) do not extend in the first profiles (1a, 2a), but said sheets (21) lie between the first profiles (1a, 2a) and the fence.

Further the cabling device comprises a vertical extending duct (8) which is connected to both the first duct and the second duct such that cables (14) can lie in both the vertical extending duct (8) and the second duct or can lie in both the vertical extending duct (8) and the first duct.

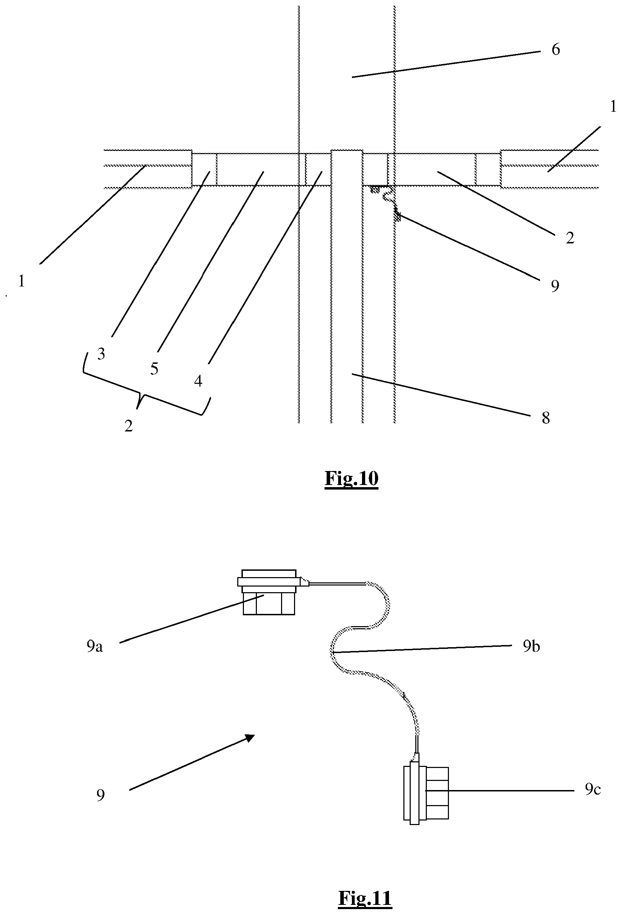

The cabling device also comprises a grounding system (9) (figures 1, 10 and 11), wherein the said grounding system (9) comprises a first contact element (9a), which is connected to a said adapting duct element (2) and a second contact element (9c), which is connected to the fence post (6) around which the adapting duct element (2) extends, and an electrical cable (9b) which connects the first contact element (9a) with the second contact element (9c) such that the cabling device can be grounded through the said post (6).

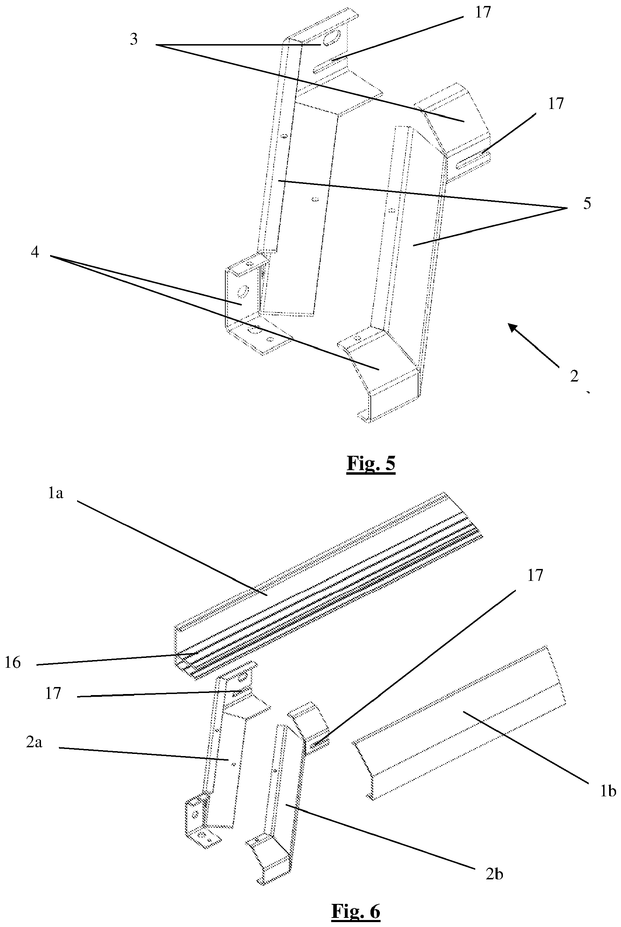

The linear duct elements (1) each comprise one divider (16) which extends in the longitudinal direction of the said linear duct element (1) over its entire length, wherein this divider (16) splits the linear duct element (1) into two compartments (18, 19), such one can choose in which compartment (18, 19) a said cable (14) extends (figure 7 and 12). The said end parts of the adapting duct elements (2) which engages in a said linear duct element (1), comprises grooves (17), see figures 5 and 6, which correspond to the said divider (16), such that they can extend into the said linear duct element (1).

Further the cabling device comprises bolts (11) and nuts (12) to fixate the cabling device to the fence, wherein the cabling device comprises for each set of a said bolt (11) and a said nut (12), a fixation aid (13) with hook elements (22). These hook elements (22) hook onto the wires of the panels (7) and each fixation aid (13) comprises an opening into which a said bolt (11) engages.

Hereafter is described how such a cabling device is attached to the fence and how the cables (14) are put into the cabling device.

Firstly all the first profiles (1a, 2a) of the duct elements (1, 2) are attached to the fence with the aid of the said nuts (12), bolts (11) and fixation aids (13). The first profiles (1a) of the linear duct elements (1) are first placed against the wire panels (7) and after this the first profiles (2a) of the adapting duct elements (2) are placed around the posts (6), such that the part of the first profile (2a) that forms partly the said end part, is placed against the first profile (1a) of its respective linear duct element (1). Then the cables (14) are placed into the said first profiles (1a, 2a). After this the second profiles (1b, 2b) are attached to the first profiles (1a, 1b). The end parts of the adapting duct elements (2) fit into the respective linear duct elements (1), such that firstly the second profiles (2b) of the adapting duct elements (2) are connected to their respective first profiles (2a). After this the second profiles (1b) of the linear duct elements (1) are clicked upon their respective first profiles (1a). The first contact element (9a) of grounding system (9) is then connected to a said adapting duct element (2) and the second contact element (9c) is connected to the post (6), around which the said adapting duct element (2) extends.

## Claims

1. Cabling device for a fence with posts (6), wherein the cabling device comprises several duct elements (1, 2) which are configured to form a first duct which is configured to connect to one side of the fence and into which cables (14) can extend, wherein these duct elements (1, 2) comprise linear duct elements (1), which are configured to extend between two posts (6) **characterized in that** these duct elements comprise adapting duct elements (2) which are configured to connect adjacent linear duct elements (1) which are separated by a said post (6), by extending around the said post (6), wherein the one or several adapting duct elements (2) comprise a protruding part which is configured to extend around the post (6) and two end parts who respectively are configured to be connected to the respective linear duct element (1).

2. Cabling device according to claim 1, **characterized in that** the linear duct elements (1) are configured to extend substantially according to a first longitudinal direction, optionally **characterized in that** the first longitudinal direction extends substantially horizontal.

3. Cabling device according to claim 1, **characterized in that** the protruding part comprises three sections which extend respectively according to the two lateral sides and the small basis of an isosceles trapezoid, optionally **characterized in that** two adapting duct elements (2) together are configured to extend around a said post (6) to connect two adjacent linear duct elements (1) separated by the said post (6), wherein each adapting duct element (2) comprises
• a first portion (3), which is configured to be connected to a said linear duct element (1) and to extend according to the first longitudinal direction, such that it forms a said end part;
• a second portion (4), which extends at a distance from and substantially parallel to the first portion (3);
• a third portion (5), wherein the third portion (5) connects on the one hand to the first portion (3) and on the other hand to the second portion (4);
and wherein the said adapting duct elements (2) are configured to lie facing each other at the height of their second portions (4), such that these second portions (4) form the small basis of the said isosceles trapezoid and each third portion (5) forms a said respective lateral side of the said isosceles trapezoid.

4. Cabling device according to any of the preceding claims, **characterized in that** one or several duct elements (1, 2) each comprise two connectable profiles (1a, 1b; 2a, 2b) wherein a first profile (1a, 2a) is configured to be located opposite the said fence side,
and wherein a second profile (1b, 2b) is connectable to the first profile (1a, 2a) after the first profile (1a, 2a) is connected to the fence,
optionally **characterized in that** the first profile (1a, 2a) and the second profile (1b, 2b) are clickable connectable to each other.

5. Cabling device according to any of the preceding claims, **characterized in that** at the height of the connection of a said linear duct element (1) and a said adapting duct element (2), a part of a said adapting duct element (2) extends within the linear duct element (1),
optionally **characterized in that** at the height of the connection of a said linear duct element (1) and a said adapting duct element (2), the inner dimensions of the section of the linear duct element (1), perpendicular to the longitudinal direction of the linear duct element (1), correspond to the outer dimensions of the corresponding section of the adapting duct element (2), such that the adapting duct element (2) is form fitted into the linear duct element (1).

6. Cabling device according to any of the preceding claims, **characterized in that** the cabling device comprises ballistic protection material.

7. Cabling device according to claim 6, **characterized in that** the ballistic protection material is present under the form of sheets (21) and/or
**characterized in that** the ballistic protection material comprises fiberglass composite.

8. Cabling device according to any of the preceding claims, **characterized in that** the cabling device comprises at least one upright duct (8), which is configured to extend vertical, wherein the said upright duct (8) is configured to be connected to the first duct, such that a cable (14) can extend in both the first duct and the upright duct (8).

9. Cabling device according to any of the preceding element, **characterized in that** the cabling device comprises a grounding system (9) which is configured to connect the first duct to a said fence post (6), to ground the cabling device,
optionally **characterized in that** the grounding system (9) comprises a first contact element (9a), which is configured to be connected to a said adapting duct element (2) and a second contact element (9c), which is configured to be connected to the fence post (6) around which the adapting duct element (2) extends, wherein the said grounding system (9) can comprise an electrical cable (9b) which connects the first contact element (9a) with the second contact element (9c) such that the first duct is grounded through the said post (6).

10. Cabling device according to any of the preceding claims, **characterized in that** at least one linear duct element (1) comprises one or several dividers (16) which extend in the longitudinal direction of the linear duct element (1) and which divide the linear duct element (1) in two or several compartments (18, 19) which extend along the longitudinal direction of the linear duct element (1).

11. Cabling device according to any of the preceding claims, **characterized in that** the cabling device comprises a least a second set of duct elements (1, 2) which are provided to form a second duct which connects to the said side of the fence and into which cables (14) extend.

12. Cabling device according to any of the preceding claims, **characterized in that** the cabling device comprises bolts (11) and nuts (12) to fixate the first duct to the said side of the fence, wherein the cabling device comprises a fixation aid (13) comprising hook elements (22) which are provided to hook on the fence and wherein this fixation aid (13) comprises an opening into which a said bolt (11) is provided to engage.

13. Fence with posts (6) comprising a cabling device, **characterized in that** the cabling device is a cabling device according to any of the preceding claims.

14. Fence according to claim 13, **characterized in that** the fence comprises several panels (7), preferably wire panels (7), wherein the first duct is directly connected to these panels (7) with the aid of connecting elements, such as bolts (11) and nuts (12).

## Patentansprüche

1. Verkabelungsvorrichtung für einen Zaun mit Pfosten (6), wobei die Verkabelungsvorrichtung mehrere Kanalelemente (1, 2) umfasst, die konfiguriert sind, um einen ersten Kanal zu bilden, der konfiguriert ist, um mit einer Seite des Zauns zu verbinden, und in den sich Kabel (14) erstrecken können, wobei diese Kanalelemente (1, 2) lineare Kanalelemente (1) umfassen, die konfiguriert sind, um sich zwischen zwei Pfosten (6) zu erstrecken, **dadurch gekennzeichnet, dass** diese Kanalelemente sich anpassende Kanalelemente (2) umfassen, die konfiguriert sind, um benachbarte lineare Kanalelemente (1) zu verbinden, die durch einen solchen Pfosten (6) getrennt sind, indem sie sich um den Pfosten (6) erstrecken, wobei das eine oder die mehreren sich anpassenden Kanalelemente (2) einen vorstehenden Teil, der sich um den Pfosten (6) erstreckt, und zwei Endteile umfassen, die jeweils konfiguriert sind, um mit dem entsprechenden linearen Kanalelement (1) verbunden zu sein.

2. Verkabelungsvorrichtung nach Anspruch 1, **dadurch gekennzeichnet, dass** die linearen Kanalelemente (1) konfiguriert sind, um sich im Wesentlichen gemäß einer ersten Längsrichtung zu erstrecken, optional **dadurch gekennzeichnet, dass** sich die erste Längsrichtung im Wesentlichen horizontal erstreckt.

3. Verkabelungsvorrichtung nach Anspruch 1, **dadurch gekennzeichnet, dass** der vorstehende Teil drei Abschnitte umfasst, die sich jeweils gemäß den zwei lateralen Seiten und der kleinen Basis eines gleichschenkligen Trapezes erstrecken,
optional **dadurch gekennzeichnet, dass** die zwei sich anpassenden Kanalelemente (2) zusammen konfiguriert sind, um sich um einen solchen Pfosten (6) zu erstrecken, um zwei benachbarte lineare Kanalelemente (1) zu verbinden, die durch den Pfosten (6) getrennt sind, wobei jedes sich anpassende Kanalelement (2) Folgendes umfasst
• einen ersten Abschnitt (3), der konfiguriert ist, um mit einem linearen Kanalelement (1) verbunden zu sein und um sich gemäß der ersten Längsrichtung zu erstrecken, sodass er einen solchen Endteil bildet;
• einen zweiten Abschnitt (4), der sich in einem Abstand von und im Wesentlichen parallel zu dem ersten Abschnitt (3) erstreckt;
• einen dritten Abschnitt (5), wobei der dritte Abschnitt (5) auf der einen Seite mit dem ersten Abschnitt (3) und auf der anderen Seite mit dem zweiten Abschnitt (4) verbindet;
und wobei die sich anpassenden Kanalelemente (2) konfiguriert sind, um auf der Höhe ihrer zweiten Abschnitte (4) einander zugewandt zu liegen, sodass diese zweiten Abschnitte (4) die kleine Basis des gleichschenkligen Trapezes bilden und jeder dritte Abschnitt (5) eine solche entsprechende laterale Seite des gleichschenkligen Trapezes bildet.

4. Verkabelungsvorrichtung nach einem der vorhergehenden Ansprüche, **dadurch gekennzeichnet, dass** ein oder mehrere Kanalelemente (1, 2) jeweils zwei verbindbare Profile (1a, 1b; 2a, 2b) umfassen, wobei ein erstes Profil (1a, 2a) konfiguriert ist, um sich gegenüber der Zaunseite zu befinden, und wobei ein zweites Profil (1a, 2b) mit dem ersten Profil (1a, 2a) verbunden werden kann, nachdem das erste Profil (1a, 2a) mit dem Zaun verbunden ist,
optional **dadurch gekennzeichnet, dass** das erste Profil (1a, 2a) und das zweite Profil (1b, 2b) klickbar miteinander verbunden werden können.

5. Verkabelungsvorrichtung nach einem der vorhergehenden Ansprüche, **dadurch gekennzeichnet, dass** sich, auf der Höhe der Verbindung des linearen Kanalelements (1) und eines solchen sich anpassenden Kanalelements (2), ein Teil eines solchen sich anpassenden Kanalelements (2) in dem linearen Kanalelement (1) erstreckt,
optional **dadurch gekennzeichnet, dass**, auf der Höhe der Verbindung des linearen Kanalelements (1) und eines solchen sich anpassenden Kanalelements (2), die Innenabmessungen des Abschnitts des linearen Kanalelements (1), senkrecht zu der Längsrichtung des linearen Kanalelements (1), den Außenabmessungen des entsprechenden Abschnitts des sich anpassenden Kanalelements (2) entsprechen, sodass das sich anpassende Kanalelement (2) in das lineare Kanalelement (1) formangepasst ist.

6. Verkabelungsvorrichtung nach einem der vorhergehenden Ansprüche, **dadurch gekennzeichnet, dass** die Verkabelungsvorrichtung ballistisches Schutzmaterial umfasst.

7. Verkabelungsvorrichtung nach Anspruch 6, **dadurch gekennzeichnet, dass** das ballistische Schutzmaterial unter der Form von Blechen (21) vorhanden ist und/oder
**dadurch gekennzeichnet, dass** das ballistische Schutzmaterial Glasfaserverbundwerkstoff umfasst.

8. Verkabelungsvorrichtung nach einem der vorhergehenden Ansprüche, **dadurch gekennzeichnet, dass** die Verkabelungsvorrichtung mindestens einen senkrechten Kanal (8) umfasst, der konfiguriert ist, um sich vertikal zu erstrecken, wobei der senkrechte Kanal (8) konfiguriert ist, um mit dem ersten Kanal verbunden zu sein, sodass sich ein Kabel (14) sowohl in den ersten Kanal als auch den senkrechten Kanal (8) erstrecken kann.

9. Verkabelungsvorrichtung nach einem des vorhergehenden Elements, **dadurch gekennzeichnet, dass** die Verkabelungsvorrichtung ein Erdungssystem (9) umfasst, das konfiguriert ist, um den ersten Kanal mit einem solchen Zaunpfosten (6) zu verbinden, um die Verkabelungsvorrichtung zu erden,
optional **dadurch gekennzeichnet, dass** das Erdungssystem (9) ein erstes Kontaktelement (9a), das konfiguriert ist, um mit einem solchen sich anpassenden Kanalelement (2) verbunden zu sein, und ein zweites Kontaktelement (9c) umfasst, das konfiguriert ist, um mit dem Zaunpfosten (6) verbunden zu sein, um den sich das sich anpassende Kanalelement (2) erstreckt, wobei das Erdungssystem (9) ein elektrisches Kabel (9b) umfassen kann, das das erste Kontaktelement (9a) mit dem zweiten Kontaktelement (9c) verbindet, sodass der erste Kanal durch den Pfosten (6) geerdet ist.

10. Verkabelungsvorrichtung nach einem der vorhergehenden Ansprüche, **dadurch gekennzeichnet, dass** mindestens ein lineares Kanalelement (1) ein oder mehrere Trennelemente (16) umfasst, die sich in die Längsrichtung des linearen Kanalelements (1) erstrecken, und die das lineare Kanalelement (1) in zwei oder mehrere Kammern (18, 19) unterteilt, die sich entlang der Längsrichtung des linearen Kanalelements (1) erstrecken.

11. Verkabelungsvorrichtung nach einem der vorhergehenden Ansprüche, **dadurch gekennzeichnet, dass** die Verkabelungsvorrichtung mindestens einen zweiten Satz Kanalelemente (1, 2) umfasst, die bereitgestellt sind, um einen zweiten Kanal zu bilden, der mit der Seite des Zauns verbindet und in den sich Kabel (14) erstrecken.

12. Verkabelungsvorrichtung nach einem der vorhergehenden Ansprüche, **dadurch gekennzeichnet, dass** die Verkabelungsvorrichtung Schrauben (11) und Muttern (12) umfasst, um den ersten Kanal an der Seite des Zauns zu befestigen, wobei die Verkabelungsvorrichtung eine Fixierhilfe (13) umfasst, die Hakenelemente (22) umfasst, die bereitgestellt sind, um sich am Zaun einzuhaken, und wobei diese Fixierhilfe (13) eine Öffnung umfasst, in der die Schraube (11) zum Eingriff bereitgestellt ist.

13. Zaun mit Pfosten (6), umfassend eine Verkabelungsvorrichtung, **dadurch gekennzeichnet, dass** die Verkabelungsvorrichtung eine Verkabelungsvorrichtung nach einem der vorhergehenden Ansprüche ist.

14. Zaun nach Anspruch 13, **dadurch gekennzeichnet, dass** der Zaun mehrere Platten (7) umfasst, bevorzugt Drahtplatten (7), wobei der erste Kanal unmittelbar mit diesen Platten (7) mit der Hilfe von Verbindungselementen, wie z. B. Schrauben (11) und Muttern (12), verbunden ist.

## Revendications

1. Dispositif de câblage pour une clôture avec des piquets (6), dans lequel le dispositif de câblage comprend plusieurs éléments de conduit (1, 2) qui sont configurés pour former un premier conduit qui est configuré pour se raccorder à un côté de la clôture et dans lequel des câbles (14) peuvent s'étendre, dans lequel ces éléments de conduit (1, 2) comprennent des éléments de conduit linéaires (1), qui sont configurés pour s'étendre entre deux piquets (6), **caractérisé en ce que** ces éléments de conduit comprennent des éléments de conduit d'adaptation (2) qui sont configurés pour raccorder des éléments de conduit linéaires adjacents (1) qui sont séparés par un dit piquet (6), en s'étendant autour dudit piquet (6), dans lequel l'un ou les plusieurs éléments de conduit d'adaptation (2) comprennent une partie saillante qui est configurée pour s'étendre autour du piquet (6) et deux parties d'extrémité qui sont respectivement configurées pour être raccordées à l'élément de conduit linéaire respectif (1).

2. Dispositif de câblage selon la revendication 1, **caractérisé en ce que** les éléments de conduit linéaires (1) sont configurés pour s'étendre sensiblement selon une première direction longitudinale,
optionnellement **caractérisé en ce que** la première direction longitudinale s'étend de façon sensiblement horizontale.

3. Dispositif de câblage selon la revendication 1, **caractérisé en ce que** la partie saillante comprend trois sections qui s'étendent respectivement selon les deux côtés latéraux et la petite base d'un trapézoïde isocèle,
optionnellement **caractérisé en ce que** deux éléments de conduit d'adaptation (2) sont conjointement configurés pour s'étendre autour d'un dit piquet (6) pour raccorder deux éléments de conduit linéaires adjacents (1) séparés par ledit piquet (6), dans lequel chaque élément de conduit d'adaptation (2) comprend
• une première portion (3), qui est configurée pour être raccordée à un dit élément de conduit linéaire (1) et pour s'étendre selon la première direction longitudinale, de telle sorte qu'elle forme une dite partie d'extrémité ;
• une deuxième portion (4), qui s'étend à une distance de, et de façon sensiblement parallèle à, la première portion (3) ;
• une troisième portion (5), dans lequel la troisième portion (5) se raccorde d'une part à la première portion (3) et d'autre part à la deuxième portion (4) ;
et dans lequel lesdits éléments de conduit d'adaptation (2) sont configurés pour se faire face l'un à l'autre à la hauteur de leurs deuxièmes portions (4), de telle sorte que ces deuxièmes portions (4) forment la petite base dudit trapèze isocèle et chaque troisième portion (5) forme un dit côté latéral respectif dudit trapèze isocèle.

4. Dispositif de câblage selon l'une quelconque des revendications précédentes, **caractérisé en ce qu'**un ou plusieurs éléments de conduit (1, 2) comprennent chacun deux profilés raccordables (1a, 1b ; 2a, 2b) dans lequel un premier profilé (1a, 2a) est configuré pour être situé en face dudit côté de clôture,
et dans lequel un second profilé (1b, 2b) est raccordable au premier profilé (1a, 2a) après que le premier profilé (1a, 2a) est raccordé à la clôture,
optionnellement **caractérisé en ce que** le premier profilé (1a, 2a) et le second profilé (1b, 2b) sont raccordables par encliquetage l'un à l'autre.

5. Dispositif de câblage selon l'une quelconque des revendications précédentes, **caractérisé en ce que**, à la hauteur du raccordement d'un dit élément de conduit linéaire (1) et d'un dit élément de conduit d'adaptation (2), une partie d'un dit élément de conduit d'adaptation (2) s'étend à l'intérieur de l'élément de conduit linéaire (1),
optionnellement **caractérisé en ce que**, à la hauteur du raccordement d'un dit élément de conduit linéaire (1) et d'un dit élément de conduit d'adaptation (2), les dimensions intérieures de la section de l'élément de conduit linéaire (1), perpendiculaire à la direction longitudinale de l'élément de conduit linéaire (1), correspondent aux dimensions extérieures de la section correspondante de l'élément de conduit d'adaptation (2), de telle sorte que l'élément de conduit d'adaptation (2) soit ajusté en forme dans l'élément de conduit linéaire (1).

6. Dispositif de câblage selon l'une quelconque des revendications précédentes, **caractérisé en ce que** le dispositif de câblage comprend un matériau de protection balistique.

7. Dispositif de câblage selon la revendication 6, **caractérisé en ce que** le matériau de protection balistique est présent sous la forme de feuilles (21), et/ou
**caractérisé en ce que** le matériau de protection balistique comprend un composite de fibre de verre.

8. Dispositif de câblage selon l'une quelconque des revendications précédentes, **caractérisé en ce que** le dispositif de câblage comprend au moins un conduit vertical (8), qui est configuré pour s'étendre verticalement, dans lequel ledit conduit vertical (8) est configuré pour être raccordé au premier conduit, de telle sorte qu'un câble (14) puisse s'étendre dans le premier conduit et dans le conduit vertical (8).

9. Dispositif de câblage selon l'un quelconque de l'élément précédent, **caractérisé en ce que** le dispositif de câblage comprend un système de mise à la terre (9) qui est configuré pour raccorder le premier conduit à un dit clôture piquet (6), pour mettre à la terre le dispositif de câblage,
optionnellement **caractérisé en ce que** le système de mise à la terre (9) comprend un premier élément de contact (9a), qui est configuré pour être raccordé à un dit élément de conduit d'adaptation (2) et un second élément de contact (9c), qui est configuré pour être raccordé au piquet de clôture (6) autour duquel l'élément de conduit d'adaptation (2) s'étend, dans lequel ledit système de mise à la terre (9) peut comprendre un câble électrique (9b) qui connecte le premier élément de contact (9a) au second élément de contact (9c) de telle sorte que le premier conduit soit mis à la terre par l'intermédiaire dudit piquet (6).

10. Dispositif de câblage selon l'une quelconque des revendications précédentes, **caractérisé en ce qu'**au moins un élément de conduit linéaire (1) comprend une ou plusieurs cloisons (16) qui s'étendent dans la direction longitudinale de l'élément de conduit linéaire (1) et qui divisent l'élément de conduit linéaire (1) en deux, ou plus, compartiments (18, 19) qui s'étendent le long de la direction longitudinale de l'élément de conduit linéaire (1).

11. Dispositif de câblage selon l'une quelconque des revendications précédentes, **caractérisé en ce que** le dispositif de câblage comprend un moins un second ensemble d'éléments de conduit (1, 2) qui sont prévus pour former un second conduit qui se raccorde audit côté de la clôture et dans lequel des câbles (14) s'étendent.

12. Dispositif de câblage selon l'une quelconque des revendications précédentes, **caractérisé en ce que** le dispositif de câblage comprend des boulons (11) et des écrous (12) pour fixer le premier conduit audit côté de la clôture, dans lequel le dispositif de câblage comprend une aide de fixation (13) comprenant des éléments crochets (22) qui sont prévus pour s'accrocher sur la clôture et dans lequel cette aide de fixation (13) comprend une ouverture dans laquelle un dit boulon (11) est prévu pour s'engager.

13. Clôture avec des piquets (6) comprenant un dispositif de câblage, **caractérisée en ce que** le dispositif de câblage est un dispositif de câblage selon l'une quelconque des revendications précédentes.

14. Clôture selon la revendication 13, **caractérisée en ce que** la clôture comprend plusieurs panneaux (7), de préférence des panneaux grillagés (7), dans laquelle le premier conduit est directement raccordé à ces panneaux (7) à l'aide d'éléments de raccordement, tels que des boulons (11) et des écrous (12).
